# EUROPEAN PATENT APPLICATION

(11) **EP 4 528 970 A1**
(43) Date of publication of application: **26.03.2025**
(21) Application number: 23810642.1
(22) Date of filing: 22.03.2023
(51) Int. Cl.: H02J 7/00, B60L 58/19

(54) **POWER BATTERY CHARGING AND DISCHARGING CIRCUIT, AND POWER BATTERY CHARGING AND DISCHARGING SYSTEM AND CONTROL METHOD AND CONTROL APPARATUS THEREFOR**

(30) Priority: 27.05.2022 CN 202210587891
(71) Applicant: Contemporary Amperex Technology Co., Limited, Ningde, Fujian 352100 (CN)
(72) Inventor: ZHAO, Yuanmiao, Ningde, Fujian 352100 (CN); LI, Zhanliang, Ningde, Fujian 352100 (CN); HUANG, Xiaojian, Ningde, Fujian 352100 (CN); CHEN, Xinwei, Ningde, Fujian 352100 (CN); YAN, Yu, Ningde, Fujian 352100 (CN); DAN, Zhimin, Ningde, Fujian 352100 (CN)
(74) Representative: Gong, Jinping
(86) International application number: PCT/CN2023/083128
(87) International publication number: WO 2023/226567

(57) **Abstract**

Embodiments of the present application provide a traction battery charging and discharging circuit, a system and a control method and a control device therefor. The traction battery charging and discharging circuit comprises a power module, a heating module, and a regulating switch assembly. The heating module comprises an energy storage element and a switch module. The power module comprises at least a first traction battery and a second traction battery. The regulating switch assembly comprises a plurality of switches, and is connected to the power module and the heating module. The regulating switch assembly is configured to connect the first traction battery to the second traction battery in series or in parallel in response to a regulation signal. The switch module is configured to regulate charging and discharging between the power module and the energy storage element in response to a regulation control signal, enabling flexible adjustment of the charging and discharging of the power module in different scenarios, and flexible adjustment of a battery self-heating mode.

## Description

### Technical Field

The present application relates to the technical field of batteries, and in particular to a traction battery charging and discharging circuit, a system and a control method and a control device therefor.

### Background Art

Since power modules such as rechargeable batteries have the advantages such as high energy density, recyclable charging, safety and environmental protection, the power modules are widely applied in the fields of new energy vehicles, consumer electronics, energy storage systems, etc. With the development of battery technology, various performances of the power modules are constantly improving, especially in terms of battery self-heating.

However, the battery self-heating solution currently in use is single and applicable to a single scenario. How to flexibly adjust the charging and discharging of the power modules in different scenarios, and flexibly adjust the battery self-heating solution is an urgent problem to be solved.

### Summary of the Invention

Embodiments of the present application provides a traction battery charging and discharging system, and a control method and a control device therefor, which can flexibly adjust charging and discharging voltages of a power module to meet the requirements for flexibly adjusting a battery self-heating solution in different scenarios.

In a first aspect, the present application provides a traction battery charging and discharging circuit, comprising a power module, a heating module, and a regulating switch assembly, wherein the heating module comprises an energy storage element and a switch module; the power module comprises at least a first traction battery and a second traction battery; the regulating switch assembly comprises a plurality of switches, and is connected to the power module and the heating module; the regulating switch assembly is configured to connect the first traction battery to the second traction battery in series or in parallel in response to a regulation signal; and the switch module is configured to regulate charging and discharging between the power module and the energy storage element in response to a regulation control signal.

In the traction battery charging and discharging circuit provided in the embodiments of the present application, the first traction battery and the second traction battery are connected in series or in parallel to each other by controlling the regulating switch assembly; and the switch module is controlled to regulate the charging and discharging between the power module and the energy storage element, thereby enabling flexible adjustment of the charging and discharging of the power module and flexible adjustment of a battery self-heating method in different scenarios. A high-frequency current heating mode is used when the battery temperature or the battery level is less than a set temperature; and a low-frequency current heating mode is used when the battery temperature or the battery level is greater than the set temperature.

In some embodiments, the regulating switch assembly comprises a first switch, a second switch, a third switch, and a fourth switch, wherein the first switch is disposed between a positive side of the second traction battery and a first end of the heating module; the second switch is disposed between a positive side of the first traction battery and the first end of the heating module; the third switch is disposed between a negative side of the first traction battery and a second end of the heating module; the fourth switch is disposed between the negative side of the first traction battery and the positive side of the second traction battery; and the positive side of the second traction battery is further connected to the second end of the heating module.

The traction battery charging and discharging circuit provided in the embodiments of the present application fully takes into account the requirements of the power module when charging and discharging in different situations, switches are provided at different positions in charging and discharging loops of the power module, the two traction batteries of the power module are respectively connected in series or in parallel to each other in the same circuit structure by controlling the turning on and off of different switches of the regulating switch assembly, and the charging and discharging between the traction batteries and the energy storage element are flexibly adjusted according to different self-heating solution requirements to enable the flexible adjustment of the charging and discharging of the power module in different scenarios, and the flexible adjustment of the self-heating method of the traction batteries, such as high-frequency current heating or low-frequency current heating of the traction batteries.

In some embodiments, the switch module comprises a charging and discharging switching module and a set of bridge arms, wherein the charging and discharging switching module and the set of bridge arms are connected in parallel to each other; one end of the first switch is connected to the positive side of the second traction battery, and the other end of the first switch is connected to a first end of the charging and discharging switching module; one end of the second switch, the positive side of the first traction battery, and a first end of the set of bridge arms are connected collinearly, and the other end of the second switch is connected to the first end of the charging and discharging switching module; one end of the third switch is connected to the negative side of the first traction battery, and the other end of the third switch is connected to a second end of the charging and discharging switching module, a second end of the set of bridge arms, and the negative side of the second traction battery; and one end of the fourth switch is connected to the negative side of the first traction battery, and the other end of the fourth switch is connected to the positive side of the second traction battery.

In the embodiments provided in the present application, switches are provided at different positions in charging and discharging loops of the power module, the two traction batteries of the power module are respectively connected in series or in parallel to each other in the same circuit structure by controlling the turning on and off of different switches of the regulating switch assembly, and the charging and discharging between the traction batteries and the energy storage element can flexibly adjusted according to different self-heating solution requirements without changing the configuration of the circuit, to enable the flexible adjustment of the self-heating method of the traction batteries, such as high-frequency current heating or low-frequency current heating of the traction batteries.

In some embodiments, the switch module comprises a charging and discharging switching module and a set of bridge arms, wherein the charging and discharging switching module and the set of bridge arms are connected in parallel to each other; and a first end of the energy storage element is connected to the set of bridge arms, and a second end of the energy storage element is connected to the charging and discharging switching module.

The traction battery charging and discharging circuit provided in the embodiments of the present application stores energy and supplies energy during charging and discharging by means of the charging and discharging switching module and the set of bridge arms of the switch module in different self-heating solutions and under different charging and discharging requirements, ensuring the charging and discharging between the power module and the power module, and enabling the self-heating of the power module.

In some embodiments, the energy storage element comprises an M-phase motor; the set of bridge arms comprises M phase bridge arms, M being a positive integer; M phase windings of the M-phase motor are each connected in a one-to-one correspondence to a connection point between upper and lower bridge arms of a respective phase bridge arm of the M phase bridge arms; the charging and discharging switching module comprises a first switching circuit and a second switching circuit which are connected in series to each other; and a connection point between the first switching circuit and the second switching circuit is connected to a neutral point of the M-phase motor.

The traction battery charging and discharging circuit provided in the embodiments of the present application stores energy and supplies energy during charging and discharging by means of the charging and discharging switching module and the set of bridge arms of the switch module in different self-heating solutions and under different charging and discharging requirements, ensuring the charging and discharging between the power module and the power module, and enabling the self-heating of the power module.

In some embodiments, the first switching circuit and the second switching circuit each comprise a transistor and a freewheeling diode which are connected in parallel to each other.

The traction battery charging and discharging circuit provided in the embodiments of the present application improves the efficiency of the charging and discharging switching module in freely switching the charging and discharging between the battery and the motor by means of the transistors and the freewheeling diodes connected in parallel to each other.

In some embodiments, the first switching circuit and the second switching circuit each comprise a transistor or a relay switch.

The traction battery charging and discharging circuit provided in the embodiments of the present application improves the efficiency of the charging and discharging switching module in freely switching the charging and discharging between the battery and the motor by means of the transistors or the relay switches.

In some embodiments, a first voltage stabilizing capacitor is connected in parallel across the charging and discharging switching module

The traction battery charging and discharging circuit provided in the embodiments of the present application ensures, by means of the first voltage stabilizing capacitor, that the voltage across the charging and discharging switching module during the charging and discharging is stable and continuous.

In some embodiments, a second voltage stabilizing capacitor is connected in parallel across the set of bridge arms.

The traction battery charging and discharging circuit provided in the embodiments of the present application ensures, by means of the second voltage stabilizing capacitor, that the voltage across the set of bridge arms during the charging and discharging is stable and continuous.

In some embodiments, the motor is a three-phase motor, and currents flowing through all windings of the motor are equal in magnitude and phase.

In the traction battery charging and discharging circuit provided in the embodiments of the present application, the currents of all the windings of the motor being equal in magnitude and phase ensures the control synchronization and flexibility of bridge arm switches of the set of bridge arms.

In a second aspect, the present application provides a power consuming apparatus, comprising a control module, and a traction battery charging and discharging circuit of any one of the embodiments in the first aspect described above, wherein the control module is connected to the switch module and the regulating switch assembly, and is configured to control the regulating switch assembly to connect the first traction battery to the second traction battery in series or in parallel in response to a regulation signal; and to control the switch module to regulate charging and discharging between the power module and the energy storage element in response to a regulation control signal.

In the power consuming apparatus provided in the embodiments of the present application, thanks to the control module and the traction battery charging and discharging circuit, the first traction battery and the second traction battery are connected in series or in parallel to each other by controlling the regulating switch assembly; and the switch module is controlled to regulate the charging and discharging between the power module and the energy storage element, thereby enabling flexible adjustment of the charging and discharging of the power module and flexible adjustment of a battery self-heating method, such as high-frequency current heating or low-frequency current heating of the traction battery, in different scenarios. During the high-frequency current heating, the safety is high, and during the low-frequency current heating, the internal resistance of the battery is high and the temperature rise rate is large.

In a third aspect, the present application provides a traction battery charging and discharging method, which is applied to the power consuming apparatus in the second aspect, the method comprising: acquiring a battery heating regulation signal; and controlling, in accordance with the battery heating regulation signal, the regulating switch assembly to connect the first traction battery to the second traction battery in series or in parallel, and the switch module to regulate charging and discharging between the power module and the energy storage element.

In the traction battery charging and discharging method provided by the embodiments of the present application, the first traction battery and the second traction battery are connected in series or in parallel to each other by controlling the regulating switch assembly; and the switch module is controlled to regulate the charging and discharging between the power module and the energy storage element, thereby enabling flexible adjustment of the charging and discharging of the power module and flexible adjustment of a battery self-heating method, such as high-frequency current heating or low-frequency current heating of the traction battery, in different scenarios. During the high-frequency current heating, the safety is high, and during the low-frequency current heating, the internal resistance of the battery is high and the temperature rise rate is large.

In some embodiments, the battery heating regulation signal comprises a first battery heating regulation signal and a second battery heating regulation signal; and the traction battery charging and discharging method further comprises: acquiring a first temperature of the first traction battery, a first battery level of the first traction battery, a second temperature of the second traction battery, or a second battery level of the second traction battery; issuing the first battery heating regulation signal when the first temperature or the second temperature is less than a temperature threshold, or when the first battery level or the second battery level is greater than a battery level threshold; and issuing the second battery heating regulation signal when the first temperature or the second temperature is greater than or equal to a temperature threshold, or when the first battery level or the second battery level is less than or equal to a battery level threshold.

In the traction battery charging and discharging method provided by the embodiments of the present application, according to different scenarios corresponding to the temperatures and remaining battery levels of the first traction battery and the second traction battery, a high-frequency current heating mode is used when the battery temperature or the battery level is less than a set temperature; and a low-frequency current heating mode is used when the battery temperature or the battery level is greater than the set temperature.

In some embodiments, the step of controlling, in accordance with the battery heating regulation signal, the regulating switch assembly to connect the first traction battery to the second traction battery in series or in parallel, and the switch module to regulate charging and discharging between the power module and the energy storage element particularly comprises: controlling, in accordance with the first battery heating regulation signal, the regulating switch assembly to connect the first traction battery to the second traction battery in series, and the switch module to regulate charging and discharging between the power module and the energy storage element; or controlling, in accordance with the second battery heating regulation signal, the regulating switch assembly to connect the first traction battery to the second traction battery in parallel, and the switch module to regulate charging and discharging between the first traction battery, the energy storage element, and the second traction battery.

In the traction battery charging and discharging method provided in the embodiments of the present application, when a high-frequency current heating mode is used, the first traction battery is connected to the second traction battery in series, and the switch module is controlled to regulate the charging and discharging between the power module and the energy storage element; and when a low-frequency current heating mode is used, the first traction battery is connected to the second traction battery in parallel, and the switch module is controlled to regulate the charging and discharging between the first traction battery, the energy storage element and the second traction battery.

In some embodiments, the step of controlling the switch module to regulate charging and discharging between the power module and the energy storage element particularly comprises: controlling the power module to charge the energy storage element during a first period of time; and controlling the energy storage element to charge the power module during a second period of time; wherein the control during the first period of time and the control during the second period of time are continuously performed alternately.

In the embodiments provided in the present application, in particular when the high-frequency current heating mode is used, the first traction battery and the second traction battery are first controlled to be connected in series to each other, the charging and discharging between the power module and the energy storage element are then alternately shifted by switching the switches of the switch module, thereby enabling self-heating of the power module at high frequencies.

During the self-heating of the power module, continuous self-heating is enabled by alternating the control during the first period of time and the control during the second period of time.

In some embodiments, the regulating switch assembly comprises a first switch, a second switch, a third switch, and a fourth switch; and the step of controlling the regulating switch assembly to connect the first traction battery to the second traction battery in series particularly comprises: controlling the second switch and the fourth switch to be closed, and the first switch and the third switch to be opened, to connect the first traction battery to the second traction battery in series.

In the traction battery charging and discharging method provided in the embodiments of the present application, the first traction battery and the second traction battery are controlled to be connected in series to each other by controlling the second switch and the fourth switch to be closed.

In some embodiments, the switch module comprises a charging and discharging switching module and a set of bridge arms, the charging and discharging switching module comprising a first switching circuit and a second switching circuit; and the step of controlling the switch module to regulate charging and discharging between the power module and the energy storage element particularly comprises: controlling all upper bridge arms of the set of bridge arms and the second switching circuit to be turned on, and all lower bridge arms of the set of bridge arms and the first switching circuit to be turned off during a first period of time; and controlling all the lower bridge arms of the set of bridge arms and the first switching circuit to be turned on, and all the upper bridge arms of the set of bridge arms and the second switching circuit to be turned off during a second period of time; wherein the control during the first period of time and the control during the second period of time are continuously performed alternately.

In the traction battery charging and discharging method provided in the embodiments of the present application, when a high-frequency current heating mode is used, the charging and discharging between the power module and the energy storage element are alternately shifted, in particular by opening and closing the charging and discharging switching module and the different bridge arms of the set of bridge arms of the switch module, thereby enabling self-heating of the power module at high frequencies. During the self-heating of the power module, continuous self-heating is enabled by alternating the control during the first period of time and the control during the second period of time.

In some embodiments, the step of controlling the switch module to regulate charging and discharging between the first traction battery, the energy storage element and the second traction battery particularly comprises: controlling the first traction battery to charge the energy storage element and the second traction battery; and/or controlling the second traction battery to charge the energy storage element and the first traction battery.

In the control method for the traction battery charging and discharging system provided in the embodiments of the present application, when a low-frequency current heating mode is used, the first traction battery is controlled to charge the energy storage element and the second traction battery, or the second traction battery is controlled to charge the energy storage element and the first traction battery, depending on different temperatures or battery levels of the first traction battery and the second traction battery.

In some embodiments, the step of controlling the first traction battery to charge the energy storage element and the second traction battery particularly comprises: controlling the first traction battery to charge the energy storage element during a first period of time; and controlling the first traction battery and the energy storage element to charge the second traction battery during a second period of time; wherein the control during the first period of time and the control during the second period of time are continuously performed alternately.

In the embodiments of the present application, when the first traction battery charges the energy storage element and the second traction battery, the first traction battery charging the energy storage element and the first traction battery and the energy storage element charging the second traction battery are performed alternately by controlling the switch module, thereby enabling continuous battery self-heating.

In some embodiments, the switch module comprises a charging and discharging switching module and a set of bridge arms, the charging and discharging switching module comprising a first switching circuit and a second switching circuit; and the step of controlling the first traction battery to charge the energy storage element and the second traction battery particularly comprises: controlling all upper bridge arms of the set of bridge arms and the second switching circuit to be turned on, and all lower bridge arms of the set of bridge arms and the first switching circuit to be turned off during a first period of time; and controlling all the upper bridge arms of the set of bridge arms and the first switching circuit to be turned on, and all the lower bridge arms of the set of bridge arms and the second switching circuit to be turned off during a second period of time; wherein the control during the first period of time and the control during the second period of time are continuously performed alternately.

In the traction battery charging and discharging method provided in the embodiments of the present application, when the first traction battery charges the energy storage element and the second traction battery, the first traction battery charging the energy storage element and the first traction battery and the energy storage element charging the second traction battery are performed alternately by controlling the opening and closing of the charging and discharging switching module and the different bridge arms of the set of bridge arms of the switch module, thereby enabling continuous battery self-heating.

In some embodiments, the step of controlling the second traction battery to charge the energy storage element and the first traction battery particularly comprises: controlling the second traction battery to charge the energy storage element during a first period of time; and controlling the second traction battery and the energy storage element to charge the first traction battery during a second period of time; wherein the control during the first period of time and the control during the second period of time are continuously performed alternately.

In the embodiments of the present application, when the second traction battery charges the energy storage element and the first traction battery, the second traction battery charging the energy storage element and the second traction battery and the energy storage element charging the first traction battery are performed alternately by controlling the switch module, thereby enabling continuous battery self-heating.

In some embodiments, the switch module comprises a charging and discharging switching module and a set of bridge arms, the charging and discharging switching module comprising a first switching circuit and a second switching circuit; and the step of controlling the second traction battery to charge the energy storage element and the first traction battery particularly comprises: controlling all lower bridge arms of the set of bridge arms and the first switching circuit to be turned on, and all upper bridge arms of the set of bridge arms and the second switching circuit to be turned off during a first period of time; controlling all the upper bridge arms of the set of bridge arms and the first switching circuit to be turned on, and all the lower bridge arms of the set of bridge arms and the second switching circuit to be turned off during a second period of time; wherein the control during the first period of time and the control during the second period of time are continuously performed alternately.

In the traction battery charging and discharging method provided in the embodiments of the present application, when the second traction battery charges the energy storage element and the first traction battery, the second traction battery charging the energy storage element and the second traction battery and the energy storage element charging the first traction battery are performed alternately by controlling the opening and closing of the charging and discharging switching module and the different bridge arms of the set of bridge arms of the switch module, thereby enabling continuous battery self-heating.

In some embodiments, the regulating switch assembly comprises a first switch, a second switch, a third switch, and a fourth switch; and the step of controlling the first traction battery to be connected to the second traction battery in parallel particularly comprises: controlling the first switch and the third switch to be closed, and the second switch and the fourth switch to be opened.

In the traction battery charging and discharging method provided in the embodiments of the present application, the first traction battery and the second traction battery are controlled to be connected in parallel to each other by controlling the first switch and the third switch to be closed.

In a fourth aspect, the present application provides a power module voltage regulation apparatus, comprising: a memory configured to store executable instructions; and a processor configured for connection with the memory to execute the executable instructions to implement a traction battery charging and discharging method of any one of the embodiments in the third aspect.

In the power module voltage regulation apparatus provided in the embodiments of the present application, the first traction battery and the second traction battery are connected in series or in parallel to each other by controlling the regulating switch assembly; and the switch module is controlled to regulate the charging and discharging between the power module and the energy storage element, thereby enabling flexible adjustment of the charging and discharging of the power module and flexible adjustment of a battery self-heating method in different scenarios. A high-frequency current heating mode is used when the battery temperature or the battery level is less than a set temperature; and a low-frequency current heating mode is used when the battery temperature or the battery level is greater than the set temperature.

In a fifth aspect, the present application provides a computer-readable storage medium having a computer program stored thereon, wherein the computer program is executed by a processor to implement a traction battery charging and discharging method of any one of the embodiments in the third aspect.

In the computer-readable storage medium provided in the embodiments of the present application, the first traction battery and the second traction battery are connected in series or in parallel to each other by controlling the regulating switch assembly; and the switch module is controlled to regulate the charging and discharging between the power module and the energy storage element, thereby enabling flexible adjustment of the charging and discharging of the power module and flexible adjustment of a battery self-heating method in different scenarios. A high-frequency current heating mode is used when the battery temperature or the battery level is less than a set temperature; and a low-frequency current heating mode is used when the battery temperature or the battery level is greater than the set temperature.

### Brief Description of the Drawings

To more clearly illustrate the technical solutions of the embodiments of the present application, the accompanying drawings required in the embodiments of the present application will be briefly described below. Obviously, the accompanying drawings described below are merely some embodiments of the present application, and for those of ordinary skill in the art, other accompanying drawings can be obtained from these accompanying drawings without making creative efforts.
FIG. 1 is a diagram of a traction battery charging and discharging circuit of the present application in a high-frequency current heating mode.
FIG. 2 is a diagram of a traction battery charging and discharging circuit of the present application in a low-frequency current heating mode.
FIG. 3 is a modular schematic diagram of a traction battery charging and discharging circuit provided in an embodiment of the present application.
FIG. 4 is a schematic circuit diagram of a traction battery charging and discharging circuit 100 provided in an embodiment of the present application.
FIG. 5 is a schematic block diagram of a power consuming apparatus 200 provided in an embodiment of the present application.
FIG. 6 is a schematic block diagram of another power consuming apparatus provided in an embodiment of the present application.
FIG. 7 is a schematic flow chart of a control method for a traction battery charging and discharging system provided in an embodiment of the present application.
FIG. 8 is a flow chart of the acquisition of a battery heating regulation signal in the control method provided in the embodiment of the present application.
FIG. 9 is a schematic flow chart of a control method for a traction battery charging and discharging system provided in another embodiment of the present application.
FIG. 10 is a schematic flow chart of the regulation of charging and discharging between a power module and an energy storage element in the control method provided in the embodiment of the present application.
FIGS. 11 and 12 are schematic diagrams of different charging loops for regulating charging and discharging between the power module and the energy storage element according to the embodiment of the present application.
FIG. 13 is a schematic flow chart of the regulation of charging and discharging between a first traction battery, the energy storage element and a second traction battery in the control method provided in the embodiment of the present application.
FIG. 14 is a schematic flow chart of the control of the first traction battery to charge the energy storage element and the second traction battery in the control method provided in the embodiment of the present application.
FIGS. 15 and 16 are schematic diagrams of different charging loops for charging the energy storage element and the second traction battery by the first traction battery according to the embodiment of the present application.
FIG. 17 is a schematic flow chart of the control of the second traction battery to charge the energy storage element and the first traction battery in the control method provided in the embodiment of the present application.
FIGS. 18 and 19 are schematic diagrams of different charging loops for charging the energy storage element and the first traction battery by the second traction battery according to the embodiment of the present application.
FIG. 20 is a schematic structural diagram of a power module voltage regulation apparatus provided in an embodiment of the present application.

In the accompanying drawings, the figures are not drawn to scale.

### Detailed Description of Embodiments

The implementations of the present application will be further described in detail below in conjunction with the accompanying drawings and embodiments. The following detailed description of the embodiments and the accompanying drawings are used to illustrate the principle of the present application by way of example and are not intended to limit the scope of the present application. That is, the present application is not limited to the described embodiments.

In the description of the present application, it should be noted that "a plurality of" means two or more, unless otherwise specified. The orientation or position relationship indicated by the terms "upper", "lower", "left", "right", "inner", "outer", etc. is only for the convenience of describing the present application and simplifying the description, rather than indicating or implying that the device or element referred to must have a particular orientation or be constructed and operated in a particular orientation, and therefore should not be construed as a limitation on the present application. In addition, the terms "first", "second", "third", etc. are merely for descriptive purposes, and should not be construed as indicating or implying the relative importance. The term "perpendicular" does not mean being perpendicular in the strict sense, but within an allowable range of tolerance. The term "parallel" does not mean being parallel in the strict sense, but within an allowable range of tolerance.

The orientation terms in the following description all indicate directions shown in the accompanying drawings, and do not limit the specific structure in the present application. In the description of the present application, it should also be noted that the terms "mounting", "connecting", and "connection" should be interpreted in the broad sense unless explicitly defined and limited otherwise. For example, the connection may be a fixed connection, a detachable connection, or an integral connection, or may be a direct connection, or an indirect connection by means of an intermediate medium. For those of ordinary skill in the art, the specific meanings of the terms mentioned above in the present application can be construed according to specific circumstances.

With the development of battery technology, various performances of the power modules are constantly improving, especially in terms of battery self-heating. However, the battery self-heating solution currently in use is single and applicable to a single scenario. How to flexibly adjust the charging and discharging of the power modules in different scenarios, and flexibly adjust the battery self-heating solution is an urgent problem to be solved.

In addition, the existing battery heating solution adopts high-frequency or low-frequency current heating, in which for the high-frequency current heating, the safety is high, but the internal resistance of the battery is small, and there is a problem of low temperature rise rate; and for the low-frequency current heating, the internal resistance of the battery is high, and the temperature rise rate is large, but reverse charging current takes too long time when the low-frequency current heating is used at low temperatures. If the reverse charging current takes too long time at low temperatures, the battery may be subjected to lithium precipitation, and the safety is low. Therefore, in different scenarios, it is very important to select different battery heating modes for different battery states or different scenario requirements.

In view of this, embodiments of the present application provide a traction battery charging and discharging system, and a control method and a control device therefor. The traction battery charging and discharging system comprises a power module, a heating module and a regulating switch assembly, in which the regulating switch assembly is configured to connect the first traction battery to the second traction battery in series or in parallel in response to a regulation signal; and the switch module is configured to regulate charging and discharging between the power module and the energy storage element in response to a regulation control signal. Flexible adjustment of the charging and discharging of the power module and flexible adjustment of a battery self-heating method are then enabled in different scenarios. A high-frequency current heating mode is used when the battery temperature or the battery level is less than a set temperature; and a low-frequency current heating mode is used when the battery temperature or the battery level is greater than the set temperature.

The power module in embodiments of the present application may be a lithium-ion battery, a lithium metal battery, a lead-acid battery, a nickel-cadmium battery, a nickel-hydrogen battery, a lithium-sulfur battery, a lithium-air battery, a sodium-ion battery, or the like, which is not limited herein. In terms of scale, the battery in the embodiments of the present application may be a battery cell, or may be a battery module or a battery pack, which is not limited herein. In terms of application scenarios, the battery may be applied to power devices such as cars and ships. For example, it may be used in an electric vehicle to supply power to the motor of the electric vehicle as a power source of the electric vehicle. The battery may further supply power to other power consuming means in the electric vehicle, such as an in-vehicle air conditioner and a vehicle-mounted player.

For convenience of description, the application of the power module to a new energy vehicle (electric vehicle) will be described below as an embodiment.

The driving motor and its control system are one of the core components of the new energy vehicle, and their driving characteristics determine the main performance indicators of the vehicle's driving. A motor driving system of the new energy vehicle is mainly composed of an electric motor (i.e., a motor), a power converter, a motor controller (e.g., an inverter), various detection sensors, and a power supply. The motor is a rotary electromagnetic machine operated by the principle of electromagnetic induction, which is used to convert electrical energy into mechanical energy. In operation, the electrical power is absorbed from an electrical system and the mechanical power is output to a mechanical system.

In the present application, in terms of battery type, the power module may be a lithium-ion battery, a lithium metal battery, a lead-acid battery, a nickel-cadmium battery, a nickel-hydrogen battery, a lithium-sulfur battery, a lithium-air battery, a sodium-ion battery, or the like, which is not specifically limited in the embodiments of the present application. In terms of battery size, the power module in the embodiments of the present application may be a battery core/battery cell, or may be a battery module or a battery pack, which is not specifically limited in the embodiments of the present application. Optionally, the power consuming device and the power consuming apparatus may be vehicles, ships, spacecrafts, etc., which are not limited in the embodiments of the present application.

Based on the discovery that existing battery systems can only employ a single type of self-heating solution due to structural constraints, for example can employ only high-frequency current heating where there is one a traction battery branch, or only low-frequency current heating when there are two traction battery branches. However, the two heating solutions each have advantages and disadvantages, in which for the high-frequency current heating, the safety is high, but the internal resistance of the battery is small, and there is a problem of low temperature rise rate; and for the low-frequency current heating, the internal resistance of the battery is high, and the temperature rise rate is large, but reverse charging current takes too long time when the low-frequency current heating is used at low temperatures. If the reverse charging current takes too long time at low temperatures, the battery may be subjected to lithium precipitation, and the safety is low. Therefore, the existing battery self-heating solution is single and not flexible enough for heating requirements in a variety of scenarios. In contrast, the present application proposes a circuit topology for self-heating mode switching and a control method therefor, which can dynamically switch the self-heating mode according to the battery temperature and current state to obtain an optimal traction battery heating effect and ensure battery safety.

First, a high-frequency current heating mode and a low-frequency current heating mode of the present application, respectively, will be explained in principle in order to better understand the circuit topology of the present application and the control method therefor.

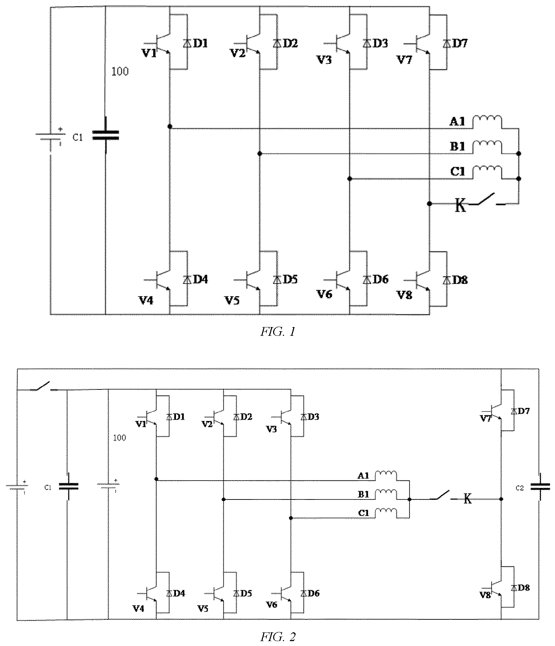

FIG. 1 is a diagram of a traction battery charging and discharging circuit of the present application in a high-frequency current heating mode.

As shown in FIG. 1, a neutral line K is drawn from a motor, a fourth bridge arm is added in addition to a set of three bridge arms of an original inverter, three phase inductors of the motor connected to the three bridge arms of the inverter are introduced with synchronous currents in the same direction. After the three phase inductors of the motor are introduced with the synchronous currents, the problems of internal noise of the motor and over-temperature demagnetization of a permanent magnet of a rotor of the motor can be improved. Current then flows from the neutral line K at a neutral point of the motor to the fourth bridge arm, and is conducted through upper and lower bridge arms of the fourth bridge arm, forming a circuit with a positive or negative pole of a battery, so that the battery forms a current that rapidly switches between charging and discharging. Moreover, since the internal resistance of the lithium battery at low temperatures is large, heat is generated inside the battery when the current flows through the battery.

In the high-frequency current heating mode in FIG. 1, the energy exchange between the battery and an energy storage means formed by the three phase inductors of the motor that are connected in parallel is mainly performed by the three-phase inductance. The three-phase parallel inductance becomes smaller, and the inductors are quickly filled with energy. Then, it is necessary to change the bridge arm conduction mode, and return energy to the battery, so that the energy is recirculated back and forth for switching between charging and discharging, thereby forming a high-frequency positive and negative alternating current.

Due to the characteristics of the lithium battery itself, when the charging and discharging current frequency is high, the internal resistance of the battery is small, and when the charging and discharging frequency is low, the internal resistance of the battery is large. Therefore, in the high-frequency current heating mode, the internal heating effect of the battery will be lower. However, at low temperatures, the lithium-ion battery is prone to lithium precipitation during charging, and the reverse charging time of the current is shorter each time. Therefore, the battery heating safety will be higher, because the lithium battery has a high risk of lithium precipitation during charging at low temperatures, but the risk of lithium precipitation is reduced at high frequencies.

FIG. 2 is a diagram of a traction battery charging and discharging circuit of the present application in a low-frequency current heating mode.

As shown in FIG. 2, based on the characteristics of the battery having a small internal resistance at high frequencies as described above, a low-frequency current heating mode is proposed with the purpose of further increasing the temperature rise rate.

In the low-frequency current heating mode, the original battery pack is decoupled into two batteries, the neutral line K is drawn from the motor, a fourth bridge arm is added, and three phase synchronous currents are introduced. The purpose of decoupling the battery pack into two batteries is that in the high-frequency current heating mode, it is mentioned that the generation of heating current is due to the energy exchange between the battery and the energy storage means acted by the inductors of the motor, and the energy has to be returned to the battery pack after the inductors are fill with energy, so that the battery is in a state of rapid high-frequency switching between charging and discharging, and the internal resistance of the battery is small in this case.

After there are two batteries, the first battery charges the inductors with energy. After the inductors are filled with the energy, the energy is put into the second battery. The first battery charges the inductors with energy again, and the inductors then release the energy to the second battery. After maintaining this state for a certain time, the first battery and the second battery are exchanged for energy exchange, and the switching time can be controlled. In this way, the longer the switching time, the longer the time for discharging and charging of the first battery and the second battery, and the lower the current frequency. According to the characteristics of the lithium-ion battery, the internal resistance of the battery is large, so that the heating effect is very good. But at low temperatures, the lithium-ion battery is prone to lithium precipitation during charging. If the charging switching time is too long or the charging current is too large, lithium precipitation may occur in the battery. Therefore, the safety is slightly lower, and it is further recommended that the battery core adopts low-temperature lithium precipitation at a slightly higher temperature.

Therefore, based on the characteristics of the two heating solutions described above for the high-frequency current heating mode and the low-frequency current heating mode, the present application makes a further invention on the heating system topology, avoiding that the heating solution can only operate in one way due to the limitations of its system circuit, and enabling the battery to have the advantages of two solutions during the heating, while improving the heating efficiency and safety.

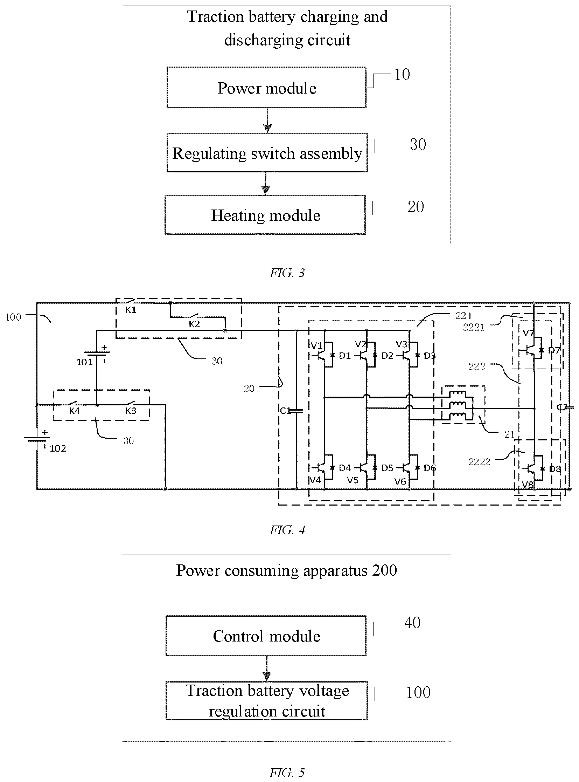

FIG. 3 is a modular schematic diagram of a traction battery charging and discharging circuit provided in an embodiment of the present application. FIG. 4 is a schematic circuit diagram of a traction battery charging and discharging circuit 100 provided in an embodiment of the present application.

As shown in FIGS. 3 and 4, the present application provides a traction battery charging and discharging circuit 100, comprising a power module 10, a heating module 20, and a regulating switch assembly 30. The power module 10 comprises at least a first traction battery 101 and a second traction battery 102. The heating module 20 comprises an energy storage element 21 and a switch module. As shown in FIG. 4, the switch module comprises a charging and discharging switching module 222 and a set of bridge arms 221 of an inverter. The regulating switch assembly 30 comprises a plurality of switches, and the regulating switch assembly 30 is connected to the power module 10 and the heating module 20. The regulating switch assembly 30 is configured to connect the first traction battery 101 to the second traction battery 102 in series or in parallel in response to a regulation signal. The switch module 22 is configured to regulate charging and discharging between the first traction battery 101 and the second traction battery 102 in the power module 10 and the energy storage element 21 in response to a regulation control signal.

In the traction battery charging and discharging circuit provided in the embodiments of the present application, the first traction battery 101 and the second traction battery 102 are connected in series or in parallel to each other by controlling the regulating switch assembly 30; and the switch module is controlled to regulate the charging and discharging between the power module 10 and the energy storage element 21, thereby enabling flexible adjustment of the charging and discharging of the power module 10 and flexible adjustment of a battery self-heating method in different scenarios. A high-frequency current heating mode is used when the battery temperature or the battery level is less than a set temperature; and a low-frequency current heating mode is used when the battery temperature or the battery level is greater than the set temperature.

In particular, the regulating switch assembly 30 comprises a first switch K1, a second switch K2, a third switch K3 and a fourth switch K4. The first switch K1 is disposed between a positive side of the second traction battery 102 and a first end of the heating module 20. The second switch K2 is disposed between a positive side of the first traction battery 101 and the first end of the heating module 20. The third switch K3 is disposed between a negative side of the first traction battery 101 and a second end of the heating module 20. The fourth switch K4 is disposed between the negative side of the first traction battery 101 and the positive side of the second traction battery 102. The positive side of the second traction battery 102 is further connected to the second end of the heating module 20.

Based on this, the traction battery charging and discharging circuit provided in the embodiments of the present application fully takes into account the requirements of the power module 10 when charging and discharging in different situations, switches are provided at different positions in charging and discharging loops of the power module 10, the two traction batteries of the power module 10 are respectively connected in series or in parallel to each other in the same circuit structure by controlling the turning on and off of different switches of the regulating switch assembly 30, and the charging and discharging between the traction batteries and the energy storage element 21 are flexibly adjusted according to different self-heating solution requirements to enable the flexible adjustment of the charging and discharging of the power module 10 in different scenarios, and the flexible adjustment of the self-heating method of the traction batteries, such as high-frequency current heating or low-frequency current heating of the traction batteries.

In particular, as shown in FIG. 4, the switch module comprises a charging and discharging switching module 222 and a set of bridge arms 221. The charging and discharging switching module 222 and the set of bridge arms 221 are connected in parallel to each other. One end of the first switch K1 is connected to the positive side of the second traction battery 102, and the other end of the first switch K1 is connected to a first end of the charging and discharging switching module 222. One end of the second switch K2, the positive side of the first traction battery 101, and a first end of the set of bridge arms 221 are connected collinearly, and the other end of the second switch K2 is connected to the first end of the charging and discharging switching module 222. One end of the third switch K3 is connected to the negative side of the first traction battery 101, and the other end of the third switch K3 is connected to a second end of the charging and discharging switching module 222, a second end of the set of bridge arms 221, and the negative side of the second traction battery 102. One end of the fourth switch K4 is connected to the negative side of the first traction battery 101, and the other end of the fourth switch K4 is connected to the positive side of the second traction battery 102.

As a result, in the embodiments provided in the present application, switches are provided at different positions in charging and discharging loops of the power module 10, the two traction batteries of the power module 10 are respectively connected in series or in parallel to each other in the same circuit structure by controlling the turning on and off of different switches of the regulating switch assembly 30, and the charging and discharging between the traction batteries and the energy storage element 21 can flexibly adjusted according to different self-heating solution requirements without changing the configuration of the circuit, to enable the flexible adjustment of the self-heating method of the traction batteries, such as high-frequency current heating or low-frequency current heating of the traction batteries.

In particular, the switch module comprises a charging and discharging switching module 222 and a set of bridge arms 221. The charging and discharging switching module 222 and the set of bridge arms 221 are connected in parallel to each other. A first end of the energy storage element 21 is connected to the set of bridge arms 221, and a second end of the energy storage element 21 is connected to the charging and discharging switching module 222.

As a result, the traction battery charging and discharging circuit provided in the embodiments of the present application stores energy and supplies energy during charging and discharging by means of the charging and discharging switching module 222 and the set of bridge arms 221 of the switch module in different self-heating solutions and under different charging and discharging requirements, ensuring the charging and discharging between the power module 10 and the power module 10, and enabling the self-heating of the power module 10.

In some embodiments, the energy storage element 21 comprises an M-phase motor; the set of bridge arms 221 comprises M phase bridge arms, M being a positive integer; M phase windings of the M-phase motor are each connected in a one-to-one correspondence to a connection point between upper and lower bridge arms of a respective phase bridge arm of the M phase bridge arms; the charging and discharging switching module 222 comprises a first switching circuit 2221 and a second switching circuit 2222, the first switching circuit 2221 and the second switching circuit 2222 being connected in series to each other; and a connection point between the first switching circuit 2221 and the second switching circuit 2222 is connected to a neutral point of the M-phase motor.

Based on this, the traction battery charging and discharging circuit provided in the embodiments of the present application stores energy and supplies energy during charging and discharging by means of the charging and discharging switching module 222 and the set of bridge arms 221 of the switch module in different self-heating solutions and under different charging and discharging requirements, ensuring the charging and discharging between the power module 10 and the power module 10, and enabling the self-heating of the power module 10.

As shown in FIG. 4, the first switching circuit 2221 and the second switching circuit 2222 each comprise a transistor and a freewheeling diode which are connected in parallel to each other.

As a result, the efficiency of the charging and discharging switching module 222 in freely switching the charging and discharging between the battery and the motor is improved by means of the transistors and the freewheeling diodes connected in parallel to each other.

In other embodiments, that first switching circuit 2221 and the second switching circuit 2222 each comprise a transistor or a relay switch.

As a result, the efficiency of the charging and discharging switching module 222 in freely switching the charging and discharging between the battery and the motor is improved by means of the transistors or the relay switches.

As shown in FIG. 4, a first voltage stabilizing capacitor C1 is connected in parallel across the charging and discharging switching module 222, and a second voltage stabilizing capacitor C2 is connected in parallel across the set of bridge arms 221.

Thus, it is ensured, by means of the first voltage stabilizing capacitor C1, that the voltage across the charging and discharging switching module 222 during the charging and discharging is stable and continuous. It is ensured, by means of the second voltage stabilizing capacitor C2, that the voltage across the set of bridge arms 221 during the charging and discharging is stable and continuous. Moreover, the first voltage stabilizing capacitor C1 and the second voltage stabilizing capacitor C2 both can provide the functions of voltage stabilizing, clutter filtering, etc.

Specifically, as shown in FIG. 4, the motor is a three-phase motor, and currents flowing through all windings of the motor are equal in magnitude and phase.

Thus, the currents of all the windings of the motor being equal in magnitude and phase ensures the control synchronization and flexibility of bridge arm switches of the set of bridge arms 221.

In addition, referring to FIG. 4, the circuit topology diagram is further described as follows

The first switch K1, the second switch K2, the third switch K3 and the fourth switch K4 of the regulating switch assembly 30 may be relay switches whose turning on or off is controlled by the control module to form a different loop.

The set of bridge arms 221 and the charging and discharging switching module 222 may be implemented by an inverter in a motor driving system. The inverter may be implemented using bridge arm switches in the form of an insulated gate bipolar transistor (IGBT). The number of bridge arms of the set of bridge arms 221 is the same as the number of inductors of the motor. For example, if the motor is a three-phase motor, the inverter comprises three phase bridge arms. Each of the three phase bridge arms has an upper bridge arm and a lower bridge arm. Each of the upper bridge arm and the lower bridge arm is provided with a switch unit. As shown in FIG. 4, each of the upper bridge arm and the lower bridge arm comprises a transistor and a freewheeling diode, which are connected in parallel to each other. That is, for example, one bridge arm of the set of bridge arms 221 comprises an upper bridge arm switch transistor V1, a freewheeling diode D1, a lower bridge arm switch transistor V4 and a freewheeling diode D4. The same applies to the other two bridge arms, see FIG. 4 for details.

An M motor may comprise a plurality of inductors, and currents flowing through all windings of the M-phase motor are equal in magnitude and phase. Taking a three-phase motor as an example, three inductors may be comprised, in which one inductor corresponds to one bridge arm of the set of bridge arms 221. One end of each of the inductors is connected to a connection point between an upper bridge arm and a lower bridge arm of the respective bridge arm, and the other ends of the inductors are connected together at a connection point which is a three-phase center point of the motor.

It should be noted that the motor is not limited to a three-phase motor, but may also be a six-phase motor or the like. Correspondingly, the six-phase motor may comprise six phase bridge arms.

Based on this, by means of the traction battery charging and discharging circuit provided in the present application, the traction battery has a set of two batteries each consisting of a first traction battery 101 and a second traction battery 102, the set of two batteries supplying power to the inverter when connected in series, for driving.

In the circuit, there is a first switch K1, a second switch K2, a third switch K3 and a fourth switch K4, which are configured to regulate the switching of series or parallel connection between the set of two batteries. The first switch K1 is connected at one end to a positive output end of the second traction battery 102 and at the other end to a common positive input end of the charging and discharging switching module 222. The second switch K2 is connected at one end to a wire between the first switch K1 and a positive pole of the charging and discharging switching module 222 and at the other end to a wire between a positive pole of the first traction battery 101 and a positive pole of the set of bridge arms 221 of the inverter. The third switch K3 is connected at one end to a negative pole of the first traction battery 101, and at the other end to a wire between a negative pole of the second traction battery 102 and a common negative pole of the set of bridge arms 221 of the inverter. The fourth switch K4 is connected at one end to the negative pole of the first traction battery 101 and at the other end to a positive pole of the second traction battery 102.

The first traction battery 101 and the second traction battery 102 of the set of batteries form a series or parallel mode by means of the switch combination of the first switch K1, the second switch K2, the third switch K3 and the fourth switch K4.

Specifically, when the fourth switch K4 is closed, and the first switch K1, the second switch K2 and the third switch K3 are opened, the first traction battery 101 and the second traction battery 102 are connected in series to each other, and the main batteries are mainly to supply power to the set of bridge arms 221 of the inverter for driving.

When the second switch K2 and the fourth switch K4 are closed, and the first switch K1 and the third switch K3 are opened, the first traction battery 101 and the second traction battery 102 of the set of batteries are in a series mode, and the batteries supply power to the set of bridge arms 221 of the inverter and the bridge arm of the charging and discharging switching module 222. In this case, a high-frequency current heating mode circuit is formed, to operate the high-frequency current heating mode. In this case, when the batteries are below a certain temperature, the high-frequency current heating mode is used to ensure the battery safety.

When the first switch K1 and the third switch K3 are closed, and the second switch K2 and the fourth switch K4 are opened, the first traction battery 101 and the second traction battery 102 of the set of batteries are in a parallel independent output mode, in which the first traction battery 101 supplies power to the set of bridge arms 221 of the inverter, and the set of batteries 2 supplies power to the heating bridge arm. In this case, a low-frequency current heating mode circuit is formed, to operate the low-frequency current heating mode. In this case, the low-frequency current heating mode is used to ensure the battery heating rate.

The circuit further comprises a set of three bridge arms of the inverter, and three phase windings of the motor, which are original components of the electric vehicle. Further comprised are a neutral connection line of the motor, and a fourth heating bridge arm, i.e. the charging and discharging switching module 222. The neutral connection line of the motor is connected from a convergence point of the three phase windings of the motor to the middle of the heating bridge arm as an output end.

FIG. 5 is a schematic block diagram of a power consuming apparatus 200 provided in an embodiment of the present application.

As shown in FIG. 5, the power consuming apparatus 200 comprises a control module 40 and a traction battery charging and discharging circuit 100. The control module 40 is connected to the switch module and the regulating switch assembly 30, and is configured to control the regulating switch assembly 30 to connect the first traction battery 101 to the second traction battery 102 in series or in parallel in response to a regulation signal; and to control the switch module to regulate charging and discharging between the power module 10 and the energy storage element 21 in response to a regulation control signal.

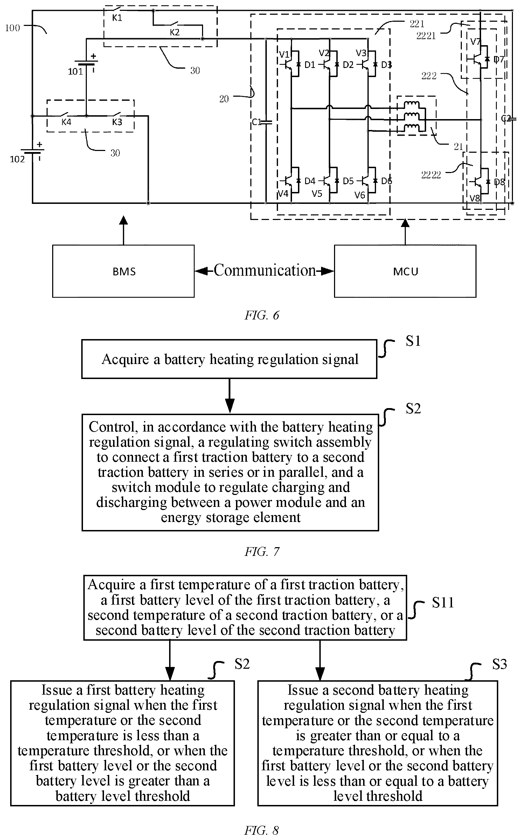

FIG. 6 is a schematic block diagram of another power consuming apparatus provided in an embodiment of the present application.

As shown in FIG. 6, optionally, a BMS in the control module monitors the temperature and the battery level of the first traction battery 101 and second traction battery 102 of the set of batteries, and controls the first switch K1, the second switch K2, the third switch K3 and the fourth switch K4, which are in the form of a relay.

The set of bridge arms 221 of the inverter, and the heating bridge arm, i.e. the charging and discharging switching module 222, are controlled by a motor control unit (MCU) in the control module.

In the power consuming apparatus provided in the embodiments of the present application, thanks to the control module and the traction battery charging and discharging circuit, the first traction battery 101 and the second traction battery 102 are connected in series or in parallel to each other by controlling the regulating switch assembly 30; and the switch module is controlled to regulate the charging and discharging between the power module 10 and the energy storage element 21, thereby enabling flexible adjustment of the charging and discharging of the power module 10 and flexible adjustment of a battery self-heating method, such as high-frequency current heating or low-frequency current heating of the traction battery, in different scenarios. During the high-frequency current heating, the safety is high, and during the low-frequency current heating, the internal resistance of the battery is high and the temperature rise rate is large.

FIG. 7 is a schematic flow chart of a control method for a traction battery charging and discharging system provided in an embodiment of the present application.

As shown in FIG. 7, the present application provides a traction battery charging and discharging method applied to the power consuming apparatus shown in FIG. 5, which specifically comprises the following steps.

In step S1, a battery heating regulation signal is acquired.

In step S2, the regulating switch assembly 30 is controlled in accordance with the battery heating regulation signal to connect the first traction battery 101 to the second traction battery 102 in series or in parallel, and the switch module is controlled in accordance with the battery heating regulation signal to regulate charging and discharging between the power module 10 and the energy storage element 21.

In the traction battery charging and discharging method provided in the embodiments of the present application, the first traction battery 101 and the second traction battery 102 are connected in series or in parallel to each other by controlling the regulating switch assembly 30; and the switch module is controlled to regulate the charging and discharging between the power module 10 and the energy storage element 21, thereby enabling flexible adjustment of the charging and discharging of the power module 10 and flexible adjustment of a battery self-heating method, such as high-frequency current heating or low-frequency current heating of the traction battery, in different scenarios. During the high-frequency current heating, the safety is high, and during the low-frequency current heating, the internal resistance of the battery is high and the temperature rise rate is large.

FIG. 8 is a flow chart of the acquisition of a battery heating regulation signal in the control method provided in the embodiment of the present application.

As shown in FIG. 8, in some embodiments, the step S1 of acquiring a battery heating regulation signal specifically comprises the following steps.

In step S11, a first temperature of the first traction battery 101, a first battery level of the first traction battery 101, a second temperature of the second traction battery 102, or a second battery level of the second traction battery 102 is acquired.

In step S12, a first battery heating regulation signal is issued when the first temperature or the second temperature is less than a temperature threshold, or when the first battery level or the second battery level is greater than a battery level threshold.

In step S13, a second battery heating regulation signal is issued when the first temperature or the second temperature is greater than or equal to a temperature threshold, or when the first battery level or the second battery level is less than or equal to a battery level threshold.

In the traction battery charging and discharging method provided by the embodiments of the present application, according to different scenarios corresponding to the temperatures and remaining battery levels of the first traction battery 101 and the second traction battery 102, a high-frequency current heating mode is used when the battery temperature or the battery level is less than a set temperature; and a low-frequency current heating mode is used when the battery temperature or the battery level is greater than the set temperature.

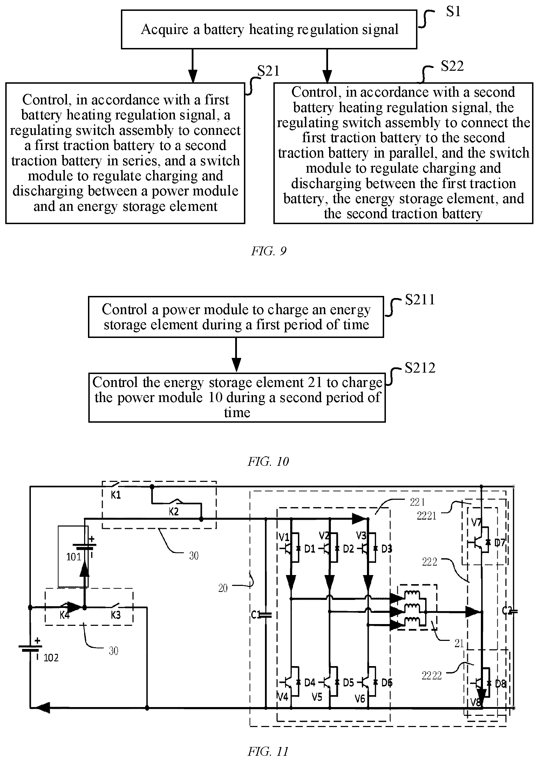

FIG. 9 is a schematic flow chart of a control method for a traction battery charging and discharging system provided in another embodiment of the present application.

As shown in FIG. 9, in a preferred embodiment, the step S2 of controlling, in accordance with the battery heating regulation signal, the regulating switch assembly to connect the first traction battery to the second traction battery in series or in parallel, and the switch module to regulate charging and discharging between the power module and the energy storage element particularly comprises the following steps.

In step S21, in accordance with the first battery heating regulation signal, the regulating switch assembly 30 is controlled to connect the first traction battery 101 to the second traction battery 102 in series, and the switch module is controlled to regulate charging and discharging between the power module 10 and the energy storage element 21.

Alternatively, in step S22, in accordance with the second battery heating regulation signal, the regulating switch assembly 30 is controlled to connect the first traction battery 101 to the second traction battery 102 in parallel, and the switch module is controlled to regulate charging and discharging between the first traction battery 101, the energy storage element 21, and the second traction battery 102.

In the traction battery charging and discharging method provided in the embodiments of the present application, when a high-frequency current heating mode is used, the first traction battery 101 is connected to the second traction battery 102 in series, and the switch module is controlled to regulate the charging and discharging between the power module 10 and the energy storage element 21; and when a low-frequency current heating mode is used, the first traction battery 101 is connected to the second traction battery 102 in parallel, and the switch module is controlled to regulate the charging and discharging between the first traction battery 101, the energy storage element 21 and the second traction battery 102.

In particular, the step of controlling the regulating switch assembly 30 to connect the first traction battery 101 to the second traction battery 102 in series particularly comprises: controlling the second switch K2 and the fourth switch K4 to be closed, and the first switch K1 and the third switch K3 to be opened, to connect the first traction battery 101 to the second traction battery 102 in series.

As a result, the first traction battery 101 and the second traction battery 102 are controlled to be connected in series to each other by controlling the second switch K2 and the fourth switch K4 to be closed.

FIG. 10 is a schematic flow chart of the regulation of charging and discharging between the power module 10 and the energy storage element 21 in the control method provided in the embodiment of the present application.

Preferably, as shown in FIG. 10, the step S21 of controlling the switch module to regulate charging and discharging between the power module 10 and the energy storage element 21 particularly comprises the following steps.

In step S211, the power module 10 is controlled to charge the energy storage element 21 during a first period of time.

In step S212, the energy storage element 21 is controlled to charge the power module 10 during a second period of time.

The control during the first period of time and the control during the second period of time are continuously performed alternately.

Specifically, during the first period of time, all upper bridge arms of the set of bridge arms 221 and the second switching circuit 2222 are controlled to be turned on, and all lower bridge arms of the set of bridge arms 221 and the first switching circuit 2221 are controlled to be turned off.

FIG. 11 is a schematic diagram of a charging loop of the corresponding traction battery charging and discharging system in this case.

Specifically, during the second period of time, all the lower bridge arms of the control set of bridge arms 221 and the first switching circuit 2221 are controlled to be turned on, and all the upper bridge arms of the set of bridge arms 221 and the second switching circuit 2222 are controlled to be turned off. The control during the first period of time and the control during the second period of time are continuously performed alternately.

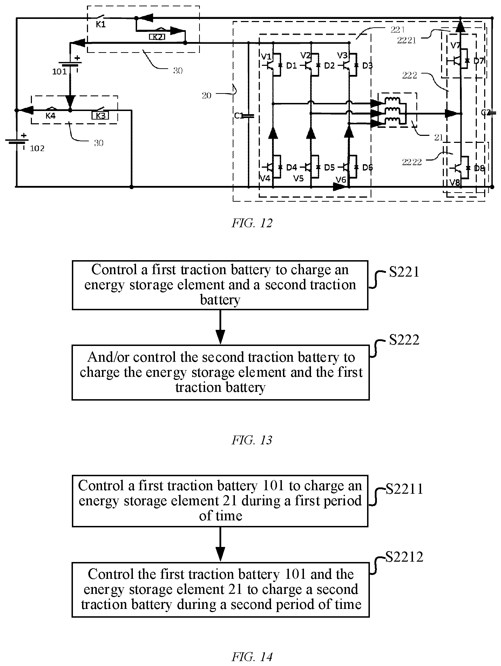

FIG. 12 is a schematic diagram of the charging loop of the corresponding traction battery charging and discharging system in this case.

As shown in FIGS. 11 and 12, when the BMS detects that the battery temperature of the first traction battery 101 or the second traction battery 102 is less than a set temperature threshold T1 or the battery level is greater than a set battery level threshold, the high-frequency current heating mode is set. In this case, the BMS closes the switches K2, K4, to complete the series connection of the set of batteries, and communicate with the MCU. The MCU performs high-frequency current heating mode control. Specifically, the control is to close VD1, VD2, VD3, VD8 in a first stage, to enable the discharge of the set of batteries to the three phase inductors of the motor as in FIG. 11; and to close VD4, VD5, VD6, VD7 in a second stage, to enable the three phase inductors of the motor to charge the set of batteries as in FIG. 12. The first and second stages are continuously switched to enable current charging and discharging of the batteries, the switching time being a preset parameter set by the MCU.

In the traction battery charging and discharging method provided in the embodiments of the present application, when a high-frequency current heating mode is used, the charging and discharging between the power module 10 and the energy storage element 21 are alternately shifted, in particular by opening and closing the charging and discharging switching module 222 and the different bridge arms of the set of bridge arms 221 of the switch module, thereby enabling self-heating of the power module 10 at high frequencies. During the self-heating of the power module 10, continuous self-heating is enabled by alternating the control during the first period of time and the control during the second period of time.

Further, the step S22 of controlling the first traction battery 101 to be connected to the second traction battery 102 in parallel particularly comprises: controlling the first switch K1 and the third switch K3 to be closed, and the second switch K2 and the fourth switch K4 to be opened.

FIG. 13 is a schematic flow chart of the regulation of charging and discharging between the first traction battery 101, the energy storage element 21 and the second traction battery 102 in the control method provided in the embodiment of the present application.

Preferably, as shown in FIG. 11, the step S22 of controlling the switch module to regulate charging and discharging between the first traction battery 101, the energy storage element 21 and the second traction battery 102 particularly comprises the following steps.

In step S221, the first traction battery 101 is controlled to charge the energy storage element 21 and the second traction battery 102.

In addition or alternatively, in step S222, the second traction battery 102 is controlled to charge the energy storage element 21 and the first traction battery 101.

In the control method for the traction battery charging and discharging system provided in the embodiments of the present application, when a low-frequency current heating mode is used, the first traction battery 101 is controlled to charge the energy storage element 21 and the second traction battery 102, or the second traction battery 102 is controlled to charge the energy storage element 21 and the first traction battery 101, depending on different temperatures or battery levels of the first traction battery 101 and the second traction battery 102.

Preferably, in this embodiment, the steps S221 and S222 are performed alternately so that the first traction battery 101 charges the inductors with energy. After the inductors are filled with the energy, the energy is put into the second traction battery 102. The first traction battery 101 charges the inductors with energy again, and the inductors then release the energy to the second traction battery 102. After maintaining this state for a certain time, the first traction battery 101 and the second traction battery 102 are exchanged for energy exchange, and the switching time can be controlled. In this way, the longer the switching time, the longer the time for discharging and charging of the two batteries, and the lower the current frequency. According to the characteristics of the lithium-ion battery, the internal resistance of the battery is large, so that the heating effect is better.

FIG. 14 is a schematic flow chart of the control of the first traction battery 101 to charge the energy storage element 21 and the second traction battery 102 in the control method provided in the embodiment of the present application.

As shown in FIG. 14, specifically, the step S221 of controlling the first traction battery 101 to charge the energy storage element 21 and the second traction battery 102 particularly comprises the following steps.

In step S2211, the first traction battery 101 is controlled to charge the energy storage element 21 during a first period of time.

Specifically, during the first period of time, all upper bridge arms of the set of bridge arms 221 and the second switching circuit 2222 are controlled to be turned on, and all lower bridge arms of the set of bridge arms 221 and the first switching circuit 2221 are controlled to be turned off.

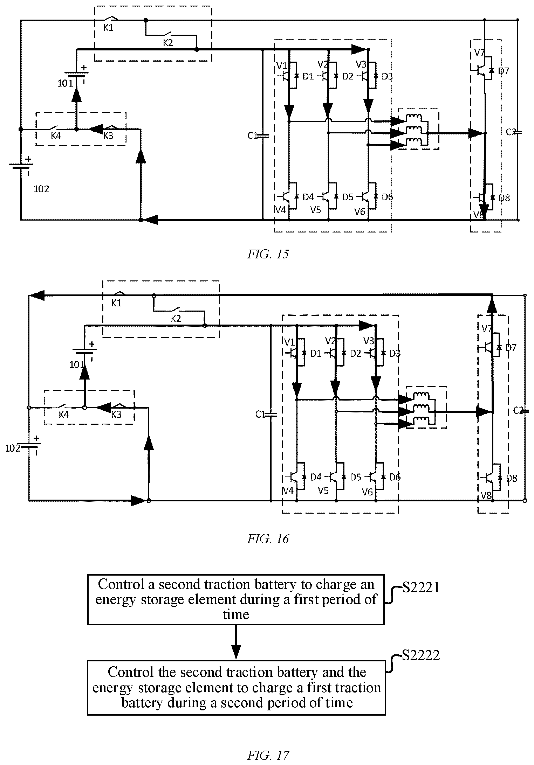

FIG. 15 is a schematic diagram of the charging loop of the corresponding traction battery charging and discharging system in this case.

In step S2212, the first traction battery 101 and the energy storage element 21 are controlled to charge the second traction battery 102 during a second period of time.

Specifically, during the second period of time, all the upper bridge arms of the control set of bridge arms 221 and the first switching circuit 2221 are controlled to be turned on, and all the lower bridge arms of the set of bridge arms 221 and the second switching circuit 2222 are controlled to be turned off.

FIG. 16 is a schematic diagram of the charging loop of the corresponding traction battery charging and discharging system in this case.

The control during the first period of time and the control during the second period of time are continuously performed alternately.

In the traction battery charging and discharging method provided in the embodiments of the present application, when the first traction battery 101 charges the energy storage element 21 and the second traction battery 102, the first traction battery 101 charging the energy storage element 21 and the first traction battery 101 and the energy storage element 21 charging the second traction battery 102 are performed alternately by controlling the opening and closing of the charging and discharging switching module 222 and the different bridge arms of the set of bridge arms 221 of the switch module, thereby enabling continuous battery self-heating.

FIG. 17 is a schematic flow chart of the control of the second traction battery 102 to charge the energy storage element 21 and the first traction battery 101 in the control method provided in the embodiment of the present application.

As shown in FIG. 17, specifically, the step S222 of controlling the second traction battery 102 to charge the energy storage element 21 and the first traction battery 101 particularly comprises the following steps.

In step S2221, the second traction battery 102 is controlled to charge the energy storage element 21 during a first period of time.

Specifically, during the first period of time, all the lower bridge arms of the control set of bridge arms 221 and the first switching circuit 2221 are controlled to be turned on, and all the upper bridge arms of the set of bridge arms 221 and the second switching circuit 2222 are controlled to be turned off.

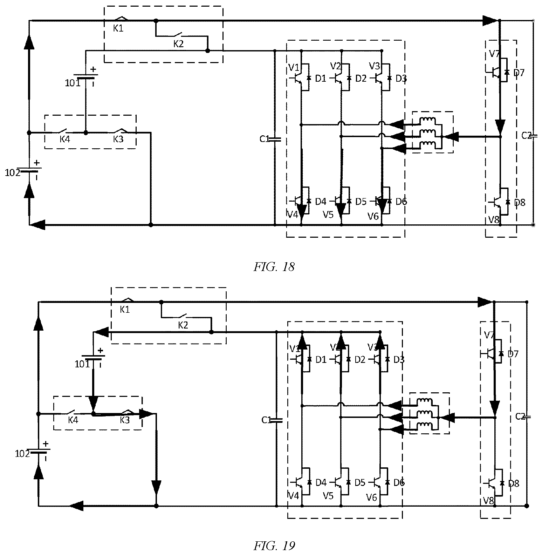

FIG. 18 is a schematic diagram of the charging loop of the corresponding traction battery charging and discharging system in this case.

In step S2222, the second traction battery 102 and the energy storage element 21 are controlled to charge the first traction battery 101 during a second period of time.

Specifically, during the second period of time, all the upper bridge arms of the control set of bridge arms 221 and the first switching circuit 2221 are controlled to be turned on, and all the lower bridge arms of the set of bridge arms 221 and the second switching circuit 2222 are controlled to be turned off.

FIG. 19 is a schematic diagram of the charging loop of the corresponding traction battery charging and discharging system in this case.

The control during the first period of time and the control during the second period of time are continuously performed alternately.

As shown in FIGS. 15, 16, 18 and 19, when the BMS detects that the battery temperature of the first traction battery 101 or the second traction battery 102 is greater than a set temperature threshold T or that the battery level is less than a set battery level threshold, the high-frequency current heating mode is stopped, the MCU is notified to stop the high-frequency current heating mode and set to the low-frequency current heating mode, and the BMS closes the switches K1, K3, to complete the parallel connection of the set of batteries, and communicate with the MCU.

Controlling the first traction battery 101 to charge the energy storage element 21 and the second traction battery 102, and controlling the second traction battery 102 to charge the energy storage element 21 and the first traction battery 101 are performed alternately.

When the first traction battery 101 is controlled to charge the energy storage element 21 and the second traction battery 102, the specific control mode is to close VD1, VD2, VD3, VD8 in a first stage, to enable the discharge of the battery 1 to the three phase inductors of the motor; and to close VD1, VD2, VD3, VD7 in a second stage, to enable the battery 1 and the three phase inductors of the motor to charge the battery 2. The first stage and the second stage are continuously switched to achieve continuous energy transfer from the battery 1 to the three phase inductors of the motor and then to the battery 2.

When the second traction battery 102 is controlled to charge the energy storage element 21 and the first traction battery 101, VD4, VD5, VD6, VD7 are closed in a first stage, to enable the discharge of the battery 2 to the three phase inductors of the motor; and VD1, VD2, VD3, VD7 are closed in a second stage, to enable the three phase inductors of the motor to charge the battery 1. The third and fourth stages are continuously switched to achieve continuous energy transfer from the battery 2 to the three phase inductors of the motor and then to the battery 1, the switching time being a preset parameter set by the MCU.

In the traction battery charging and discharging method provided in the embodiments of the present application, when the second traction battery 102 charges the energy storage element 21 and the first traction battery 101, the second traction battery 102 charging the energy storage element 21 and the second traction battery 102 and the energy storage element 21 charging the first traction battery 101 are performed alternately by controlling the opening and closing of the charging and discharging switching module 222 and the different bridge arms of the set of bridge arms 221 of the switch module, thereby enabling continuous battery self-heating.

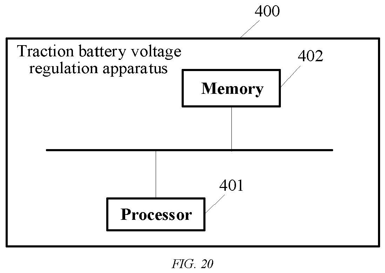

FIG. 20 shows a schematic structural diagram of a power module voltage regulation apparatus 400 according to an embodiment of the present application.

As shown in FIG. 15, the power module voltage regulation apparatus 400 comprises: a memory 402 configured to store executable instructions; and a processor 401 configured for connection with the memory 402 to execute the executable instructions to implement a motion vector prediction method.

A person skilled in the art will appreciate that the schematic diagram FIG. 15 is merely an example of the power module voltage regulation apparatus 400, does not constitute a limitation on the power module voltage regulation apparatus 400, and may comprise more or fewer components than illustrated, or combine some of the components, or different components. For example, the power module voltage regulation apparatus 400 may further comprise an input/output apparatus, a network access apparatus, or a bus, etc.

The so-called processor 401 (central processing unit (CPU)) may also be another general-purpose processor, a digital signal processor (DSP), an application specific integrated circuit (ASIC), a field-programmable gate array (FPGA), or another programmable logic device, discrete gate or transistor logic device, discrete hardware component, etc. The general-purpose processor may be a microprocessor, or the processor 401 may be any conventional processor or the like. The processor 401 is the control center of the power module voltage regulation apparatus 400, for connecting various parts of the entire power module voltage regulation apparatus 400 using various interfaces and lines.

The memory 402 may be configured to store computer-readable instructions, and the processor 401 runs or executes the computer-readable instructions or modules stored in the memory 402, and calls data stored in the memory 402, to implement various functions of the power module voltage regulation apparatus 400. The memory 402 may primarily comprise a stored program area and a stored data area. The stored program area may store an operating system, applications required by at least one function (such as a sound playback function, or an image playback function), etc. The stored data area may store data, etc., created according to the use of the power module voltage regulation apparatus 400. In addition, the memory 402 may include a hard disk, a primary memory, a plug-in hard disk, a smart media card (SMC), a secure digital (SD) card, a flash card, at least one disk storage device, a flash memory device, a read-only memory (ROM), a random access memory (RAM), or other non-volatile/volatile memory devices.

The integrated modules of the power module voltage regulation apparatus 400 can be stored on a computer-readable storage medium if implemented as software function modules and sold or used as stand-alone products. Based on this understanding, all or some of the procedures in the method of the above embodiments implemented in the present invention may also be implemented by computer-readable instructions instructing relevant hardware. The computer-readable instructions may be stored in a computer-readable storage medium, and when the computer-readable instructions are executed by a processor, the steps of the above method embodiments can be implemented.

In the power module 10 voltage regulation apparatus provided in the embodiments of the present application, the first traction battery 101 and the second traction battery 102 are connected in series or in parallel to each other by controlling the regulating switch assembly 30; and the switch module is controlled to regulate the charging and discharging between the power module 10 and the energy storage element 21, thereby enabling flexible adjustment of the charging and discharging of the power module 10 and flexible adjustment of a battery self-heating method in different scenarios. A high-frequency current heating mode is used when the battery temperature or the battery level is less than a set temperature; and a low-frequency current heating mode is used when the battery temperature or the battery level is greater than the set temperature.

Finally, the present application also provides a computer-readable storage medium having a computer program stored thereon. The computer program is executed by a processor to implement a traction battery charging and discharging method.

Those of ordinary skill in the art may realize that units and algorithm steps of various examples described with reference to the embodiments disclosed in this specification can be implemented by using electronic hardware, or a combination of computer software and electronic hardware. Whether these functions are implemented in hardware or software depends on specific applications and design constraints of the technical solutions. A person skilled in the art may use different methods to implement the described functions for each particular application, but it should not be considered that the implementation goes beyond the scope of the present application.

A person skilled in the art can clearly understand that, for the convenience and brevity of the description, references can be made to the corresponding process in the foregoing method embodiment for the specific working process of the system, the device and the unit described above, and details are not described herein again.

In the several embodiments provided in the present application, it should be understood that the disclosed system, device and method can be achieved by other methods. For example, the described device embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separated, and parts displayed as units may or may not be physical units, that is, they may be located in one position, or may be distributed on a plurality of network units. Some or all of the units may be selected according to actual requirements to achieve the objectives of the solutions of the embodiments.

In addition, various functional units in the various embodiments of the present application may be integrated into one processing unit, or various units may be physically present separately, or two or more units may be integrated into one unit.

The functions, if implemented in the form of a software functional unit and sold or used as an independent product, may be stored in a computer-readable storage medium. Based on such understanding, the technical solution of the present application, in essence or the contribution to the prior art, or part of the technical solution may be embodied in the form of a software product. The computer software product is stored in a storage medium, and comprises a plurality of instructions used to cause a computer apparatus (which may be a personal computer, a server, or a network apparatus, etc.) to perform all or part of the steps of the method described in various embodiments of the present application. The storage medium comprises: a USB flash disk, a mobile hard disk, a read-only memory (ROM), a random access memory (RAM), or a magnetic disk or optical disc or other various media capable of storing program codes.

The above description is only specific embodiments of the present application, but the scope of protection of the present application is not limited thereto, and variations and replacements that can be easily conceived within the technical scope disclosed in the present application by any person skilled in the art should fall within the scope of protection of the present application. Therefore, the scope of protection of the present application shall be subject to the scope of protection of the claims.

## Claims

1. A traction battery charging and discharging circuit, **characterized by** comprising a power module, a heating module, and a regulating switch assembly, wherein
the heating module comprises an energy storage element and a switch module;
the power module comprises at least a first traction battery and a second traction battery;
the regulating switch assembly comprises a plurality of switches, and is connected to the power module and the heating module;
the regulating switch assembly is configured to connect the first traction battery to the second traction battery in series or in parallel in response to a regulation signal; and
the switch module is configured to control charging and discharging between the power module and the energy storage element in response to a regulation control signal.

2. The charging and discharging circuit according to claim 1, **characterized in that** the regulating switch assembly comprises a first switch, a second switch, a third switch, and a fourth switch, wherein
the first switch is disposed between a positive side of the second traction battery and a first end of the heating module;
the second switch is disposed between a positive side of the first traction battery and the first end of the heating module;
the third switch is disposed between a negative side of the first traction battery and a second end of the heating module;
the fourth switch is disposed between the negative side of the first traction battery and the positive side of the second traction battery; and
the positive side of the second traction battery is further connected to the second end of the heating module.

3. The charging and discharging circuit according to claim 2, **characterized in that** the switch module comprises a charging and discharging switching module and a set of bridge arms, wherein the charging and discharging switching module and the set of bridge arms are connected in parallel to each other;
one end of the first switch is connected to the positive side of the second traction battery, and the other end of the first switch is connected to a first end of the charging and discharging switching module;
one end of the second switch, the positive side of the first traction battery, and a first end of the set of bridge arms are connected collinearly, and the other end of the second switch is connected to the first end of the charging and discharging switching module;
one end of the third switch is connected to the negative side of the first traction battery, and the other end of the third switch is connected to a second end of the charging and discharging switching module, a second end of the set of bridge arms, and the negative side of the second traction battery; and
one end of the fourth switch is connected to the negative side of the first traction battery, and the other end of the fourth switch is connected to the positive side of the second traction battery.

4. The charging and discharging circuit according to claim 1, **characterized in that** the switch module comprises a charging and discharging switching module and a set of bridge arms, wherein the charging and discharging switching module and the set of bridge arms are connected in parallel to each other; a first end of the energy storage element is connected to the set of bridge arms, and a second end of the energy storage element is connected to the charging and discharging switching module.

5. The charging and discharging circuit according to claim 4, **characterized in that** the energy storage element comprises an M-phase motor; the set of bridge arms comprises M phase bridge arms, M being a positive integer; M phase windings of the M-phase motor are each connected in a one-to-one correspondence to a connection point between upper and lower bridge arms of a respective phase bridge arm of the M phase bridge arms;
the charging and discharging switching module comprises a first switching circuit and a second switching circuit which are connected in series to each other; and a connection point between the first switching circuit and the second switching circuit is connected to a neutral point of the M-phase motor.

6. The charging and discharging circuit according to claim 5, **characterized in that** the first switching circuit and the second switching circuit each comprise a transistor and a freewheeling diode which are connected in parallel to each other.

7. The charging and discharging circuit according to claim 5, **characterized in that** the first switching circuit and the second switching circuit each comprise a transistor or a relay switch.

8. The charging and discharging circuit according to claim 4, **characterized in that** a first voltage stabilizing capacitor is connected in parallel across the charging and discharging switching module.

9. The charging and discharging circuit according to claim 4, **characterized in that** a second voltage stabilizing capacitor is connected in parallel across the set of bridge arms.

10. The charging and discharging circuit according to claim 4, **characterized in that** the motor is a three-phase motor, and currents flowing through all windings of the motor are equal in magnitude and phase.

11. A power consuming apparatus, **characterized by** comprising a control module and a traction battery charging and discharging circuit of any one of claims 1-10, wherein
the control module is connected to the switch module and the regulating switch assembly, and is configured to control the regulating switch assembly to connect the first traction battery to the second traction battery in series or in parallel in response to a regulation signal; and to control the switch module to regulate charging and discharging between the power module and the energy storage element in response to a regulation control signal.

12. A traction battery charging and discharging method, which is applied to a power consuming apparatus of claim 11, **characterized by** comprising:
acquiring a battery heating regulation signal; and
controlling, in accordance with the battery heating regulation signal, the regulating switch assembly to connect the first traction battery to the second traction battery in series or in parallel, and the switch module to regulate charging and discharging between the power module and the energy storage element.

13. The traction battery charging and discharging method according to claim 12, **characterized in that** the step of acquiring a battery heating regulation signal particularly comprises:
acquiring a first temperature of the first traction battery, a first battery level of the first traction battery, a second temperature of the second traction battery, or a second battery level of the second traction battery;
issuing a first battery heating regulation signal when the first temperature or the second temperature is less than a temperature threshold, or when the first battery level or the second battery level is greater than a battery level threshold; and
issuing a second battery heating regulation signal when the first temperature or the second temperature is greater than or equal to a temperature threshold, or when the first battery level or the second battery level is less than or equal to a battery level threshold.

14. The traction battery charging and discharging method according to claim 12 or 13, **characterized in that** the battery heating regulation signal comprises the first battery heating regulation signal and the second battery heating regulation signal; the step of controlling, in accordance with the battery heating regulation signal, the regulating switch assembly to connect the first traction battery to the second traction battery in series or in parallel, and the switch module to regulate charging and discharging between the power module and the energy storage element particularly comprises:
controlling, in accordance with the first battery heating regulation signal, the regulating switch assembly to connect the first traction battery to the second traction battery in series, and the switch module to regulate charging and discharging between the power module and the energy storage element; or
controlling, in accordance with the second battery heating regulation signal, the regulating switch assembly to connect the first traction battery to the second traction battery in parallel, and the switch module to regulate charging and discharging between the first traction battery, the energy storage element, and the second traction battery.

15. The traction battery charging and discharging method according to claim 14, **characterized in that** the step of controlling the switch module to regulate charging and discharging between the power module and the energy storage element particularly comprises:
controlling the power module to charge the energy storage element during a first period of time; and
controlling the energy storage element to charge the power module during a second period of time;
wherein the control during the first period of time and the control during the second period of time are continuously performed alternately.

16. The traction battery charging and discharging method according to claim 14, **characterized in that** the regulating switch assembly comprises a first switch, a second switch, a third switch, and a fourth switch; and the step of controlling the regulating switch assembly to connect the first traction battery to the second traction battery in series particularly comprises:
controlling the second switch and the fourth switch to be closed, and the first switch and the third switch to be opened, to connect the first traction battery to the second traction battery in series.

17. The traction battery charging and discharging method according to claim 14, **characterized in that** the switch module comprises a charging and discharging switching module and a set of bridge arms, the charging and discharging switching module comprising a first switching circuit and a second switching circuit; and
the step of controlling the switch module to regulate charging and discharging between the power module and the energy storage element particularly comprises:
controlling all upper bridge arms of the set of bridge arms and the second switching circuit to be turned on, and all lower bridge arms of the set of bridge arms and the first switching circuit to be turned off during a first period of time; and
controlling all the lower bridge arms of the set of bridge arms and the first switching circuit to be turned on, and all the upper bridge arms of the set of bridge arms and the second switching circuit to be turned off during a second period of time;
wherein the control during the first period of time and the control during the second period of time are continuously performed alternately.

18. The traction battery charging and discharging method according to claim 14, **characterized in that** the step of controlling the switch module to regulate charging and discharging between the first traction battery, the energy storage element and the second traction battery particularly comprises:
controlling the first traction battery to charge the energy storage element and the second traction battery; and/or
controlling the second traction battery to charge the energy storage element and the first traction battery.

19. The traction battery charging and discharging method according to claim 18, **characterized in that** the step of controlling the first traction battery to charge the energy storage element and the second traction battery particularly comprises:
controlling the first traction battery to charge the energy storage element during a first period of time; and
controlling the first traction battery and the energy storage element to charge the second traction battery during a second period of time;
wherein the control during the first period of time and the control during the second period of time are continuously performed alternately.

20. The traction battery charging and discharging method according to claim 18 or 19, **characterized in that** the switch module comprises a charging and discharging switching module and a set of bridge arms, the charging and discharging switching module comprising a first switching circuit and a second switching circuit; and
the step of controlling the first traction battery to charge the energy storage element and the second traction battery particularly comprises:
controlling all upper bridge arms of the set of bridge arms and the second switching circuit to be turned on, and all lower bridge arms of the set of bridge arms and the first switching circuit to be turned off during a first period of time; and
controlling all the upper bridge arms of the set of bridge arms and the first switching circuit to be turned on, and all the lower bridge arms of the set of bridge arms and the second switching circuit to be turned off during a second period of time;
wherein the control during the first period of time and the control during the second period of time are continuously performed alternately.

21. The traction battery charging and discharging method according to claim 18, **characterized in that** the step of controlling the second traction battery to charge the energy storage element and the first traction battery particularly comprises:
controlling the second traction battery to charge the energy storage element during a first period of time; and
controlling the second traction battery and the energy storage element to charge the first traction battery during a second period of time;
wherein the control during the first period of time and the control during the second period of time are continuously performed alternately.

22. The traction battery charging and discharging method according to claim 18 or 21, **characterized in that** the switch module comprises a charging and discharging switching module and a set of bridge arms, the charging and discharging switching module comprising a first switching circuit and a second switching circuit; and
the step of controlling the second traction battery to charge the energy storage element and the first traction battery particularly comprises:
controlling all lower bridge arms of the set of bridge arms and the first switching circuit to be turned on, and all upper bridge arms of the set of bridge arms and the second switching circuit to be turned off during a first period of time;
controlling all the upper bridge arms of the set of bridge arms and the first switching circuit to be turned on, and all the lower bridge arms of the set of bridge arms and the second switching circuit to be turned off during a second period of time;
wherein the control during the first period of time and the control during the second period of time are continuously performed alternately.

23. The traction battery charging and discharging method according to claim 14, **characterized in that** the regulating switch assembly comprises a first switch, a second switch, a third switch, and a fourth switch; and the step of controlling the first traction battery to be connected to the second traction battery in parallel particularly comprises:
controlling the first switch and the third switch to be closed, and the second switch and the fourth switch to be opened.

24. A traction battery charging and discharging apparatus, **characterized by** comprising:
a memory configured to store executable instructions; and
a processor configured for connection with the memory to execute the executable instructions to implement a traction battery charging and discharging method of any one of claims 12-23.

25. A computer-readable storage medium having a computer program stored thereon, **characterized in that** the computer program is executed by a processor to implement a traction battery charging and discharging method of any one of claims 12-23.
